# EUROPÄISCHE PATENTSCHRIFT

(11) **EP 3 262 331 B1**
(45) Veröffentlichungstag und Bekanntmachung des Hinweises auf die Patenterteilung: **30.10.2019**
(21) Anmeldenummer: 16705034.3
(22) Anmeldetag: 13.02.2016
(51) Int. Cl.: F16L 51/03, F16L 27/08, F01N 13/18

(54) **KOMPENSATOR**
COMPENSATOR
COMPENSATEUR

(30) Priorität: 23.02.2015 DE 102015002105
(43) Veröffentlichungstag der Anmeldung: 03.01.2018
(73) Patentinhaber: MAN Energy Solutions SE, 86153 Augsburg (DE)
(72) Erfinder: DICHTL, Johann, 86153 Augsburg (DE)
(86) Internationale Anmeldenummer: PCT/EP2016/000248
(87) Internationale Veröffentlichungsnummer: WO 2016/134828

(56) Entgegenhaltungen:
- CN-U- 203 656 459
- DE-A1- 4 436 514
- DE-B- 1 218 821
- GB-A- 1 344 998
- JP-U- H0 550 283
- KR-A- 20140 096 558
- US-A- 2 335 478
- US-A- 2 568 923
- US-A- 3 659 879
- US-A- 5 248 170

## Beschreibung

Die Erfindung betrifft einen Kompensator.

In Rohrleitungssystemen, wie zum Beispiel in Abgassystemen, finden Kompensatoren Verwendung, um zum Beispiel infolge von Temperaturzyklen bedingte Bewegungen im Rohrleitungssystem zu kompensieren. Entsprechend den drei grundsätzlichen Bewegungsarten unterscheidet man nach dem Stand der Technik Axialkompensatoren, Angularkompensatoren, Lateralkompensatoren und Universalkompensatoren. Axialkompensatoren dienen der Bewegungsaufnahme in axialer Richtung. Angularkompensatoren nehmen Biegungen bzw. Angularbewegungen auf. Lateralkompensatoren kompensieren Querbewegungen bzw. Lateralbewegungen. Universalkompensatoren kompensieren Bewegungen in allen Raumrichtungen sowie Verdrehungen um die Biegeachsen. Axialkompensatoren und Universalkompensatoren können aufgrund von axial wirkenden Innendruckreaktionskräften meist nur in Systemen mit niedrigem Druck bzw. mit niedrigen Nennweiten eingesetzt werden.

Aus der Praxis bekannte Lateralkompensatoren verfügen über typischerweise zwei Faltenbalgabschnitte, zwischen welchen ein Zwischenrohrabschnitt positioniert ist. Ferner verfügen aus der Praxis bekannte Lateralkompensatoren über vorzugsweise zwei Anschlussflansche, wobei ein erster Faltenbalgabschnitt an einem ersten Anschlussflansch und am Zwischenrohrabschnitt angreift, und wobei ein zweiter Faltenbalgabschnitt an einem zweiten Anschlussflansch und ebenfalls am Zwischenrohrabschnitt angreift. Wie bereits ausgeführt, ist der Zwischenrohrabschnitt zwischen den beiden Faltenbalgabschnitten angeordnet.

Aus der Praxis bekannte Lateralkompensatoren können keine Biegungen bzw. Angularbewegungen kompensieren. Um zusätzlich in allen Biegeebenen Angularbewegungen aufnehmen zu können, müssen zusätzlich zu einem Lateralkompensator zwei Angularkompensatoren mit Kardangelenk verbaut werden. Dies ist aus Kostengründen und Bauraumgründen von Nachteil.

Bezüglich dem Aufbau von Wellrohr-Gelenk-Kompensatoren wird noch auf die CN 203 656 459 U, die JP 5-50283 U und die DE 12 18 821 B verwiesen.

Es besteht daher Bedarf an einem neuartigen Kompensator, der die Funktion eines Lateralkompensators erweitert, nämlich derart, dass derselbe zusätzlich zu Quer- bzw. Lateralbewegungen auch Biegungen bzw. Angularbewegungen in beiden Biegeebenen kompensieren kann.

Hiervon ausgehend liegt der Erfindung die Aufgabe zu Grunde, einen neuartigen Kompensator zu schaffen.

Diese Aufgabe wird durch einen Kompensator gemäß Anspruch 1 gelöst.

Erfindungsgemäß weist der Kompensator einen Zwischenflansch auf, der zwischen dem ersten Anschlussflansch und dem zweiten Anschlussflansch positioniert ist und den Zwischenrohrabschnitt außen ohne Verbindung oder ohne starre Verbindung zu demselben umgibt, wobei der Zwischenflansch über erste Zugstangen mit dem ersten Anschlussflansch und über zweite Zugstangen dem zweiten Anschlussflansch verbunden ist. Der erfindungsgemäße Kompensator kann Lateralbewegungen sowie allachsige Biegeverdrehungen kompensieren. Er zeichnet sich durch ein geringes Gewicht und einen geringen Bauraumbedarf aus.

Erfindungsgemäß liegen die ersten Zugstangen, über die der Zwischenflansch mit dem ersten Anschlussflansch verbunden ist, auf einer ersten Achse, wobei die zweiten Zugstangen, über die der Zwischenflansch mit dem zweiten Anschlussflansch verbunden ist, auf einer zweiten Achse liegen, wobei die erste Achse und die zweite Achse sich vorzugsweise derart schneiden, dass ein Schnittpunkt der Achsen im Inneren des Kompensators liegt und die erste Achse und die zweite Achse ein Winkel von in etwa 90° einschließen. Diese Ausführung ist zur Entkopplung der in unterschiedlichen Ebenen zu erfolgenden Kompensation von Angularbewegungen besonders vorteilhaft.

Erfindungsgemäß ist zwischen dem Zwischenflansch und dem Zwischenrohrabschnitt ein Dämpfungselement angeordnet. Die Anordnung eines Dämpfungselements zwischen dem Zwischenflansch und dem Zwischenrohrabschnitt ist sowohl bei einer horizontalen Einbaulage als auch bei einer vertikalen Einbaulage des erfindungsgemäßen Kompensators von Vorteil. Bei einer vertikalen Einbaulage kann im Falle einer Schwingungsanregung ein ungedämpfter Kontakt zwischen dem Zwischenflansch und Zwischenrohrabschnitt vermieden werden, um Beschädigungen des Kompensators im Bereich des Zwischenrohrabschnitts zu vermeiden. Bei einer horizontalen Einbaulage des Kompensators kann stets ein definierter Abstand zwischen dem Zwischenrohrabschnitt und dem Zwischenflansch eingehalten werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines Kompensators;
- Fig. 2: eine Seitenansicht des erfindungsgemäßen Kompensators;
- Fig. 3: eine Draufsicht des erfindungsgemäßen Kompensators; und
- Fig. 4: den Kompensator eingebaut in eine Abgasanlage einer Brennkraftmaschine.

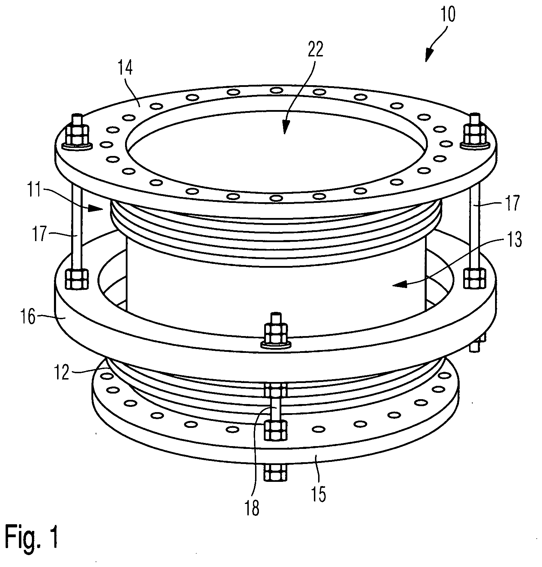

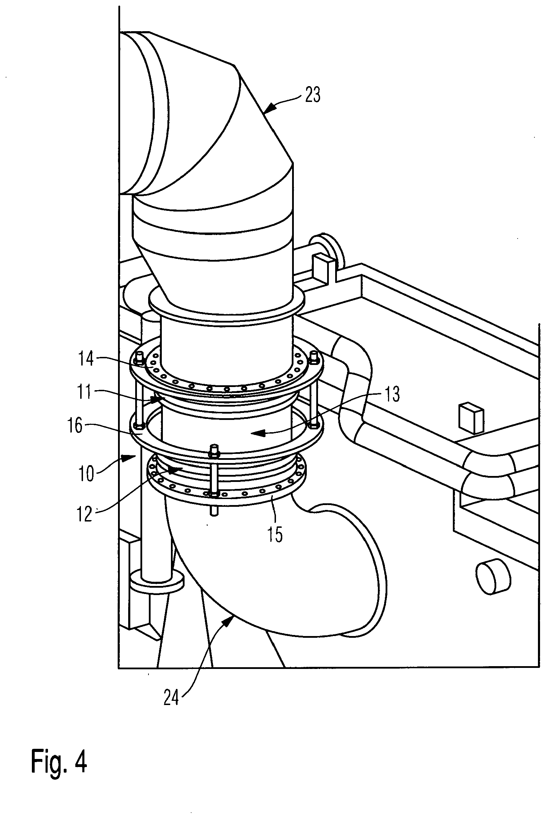

Die Erfindung betrifft einen Kompensator. Fig. 1 bis 3 zeigen unterschiedliche Ansichten eines Kompensators 10, wohingegen Fig. 4 eine bevorzugte Einbauposition bzw. einen bevorzugten Anwendungsfall des Kompensators 10 in Zusammenhang mit einem Abgassystem einer Brennkraftmaschine zeigt.

Der erfindungsgemäße Kompensator 10 verfügt über einen ersten Faltenbalgabschnitt 11 und einen zweiten Faltenbalgabschnitt 12 sowie über einen zwischen dem ersten Faltenbalgabschnitt 11 und dem zweiten Faltenbalgabschnitt 12 angeordneten und mit denselben fest verbundenen Zwischenrohrabschnitt 13. Ferner verfügt der erfindungsgemäße Kompensator 10 über einen ersten Anschlussflansch 14 und einen zweiten Anschlussflansch 15. Der erste Faltenbalgabschnitt 11 ist zwischen dem ersten Anschlussflansch 14 und dem Zwischenrohrabschnitt 13 positioniert. Auf der gegenüberliegenden Seite des Zwischenrohrabschnitts 13 ist der zweite Faltenbalgabschnitt 12 zwischen dem zweiten Anschlussflansch 15 und dem Zwischenrohrabschnitt 13 positioniert. Der erste Faltenbalgabschnitt 11 greift demnach einerseits fest am Zwischenrohrabschnitt 13 und am ersten Anschlussflansch 14 an, wohingegen der zweite Faltenbalgabschnitt 12 fest am Zwischenrohrabschnitt 13 und am zweiten Anschlussflansch 15 angreift.

Der erfindungsgemäße Kompensator 10 verfügt weiterhin über einen Zwischenflansch 16. Der Zwischenflansch 16 ist zwischen dem ersten Anschlussflansch 14 und dem zweiten Anschlussflansch 15 ohne Verbindung zum Zwischenrohrabschnitt 13 oder ohne starre Verbindung zum Zwischenrohrabschnitt 13 positioniert, wobei der Zwischenflansch 16 den Zwischenrohrabschnitt 13 radial außen abschnittsweise konzentrisch umgibt. Der Zwischenflansch 16 hängt ohne bzw. ohne starre Verbindung zum Zwischenrohrabschnitt 13 lose zwischen den Anschlussflanschen 14 und 15.

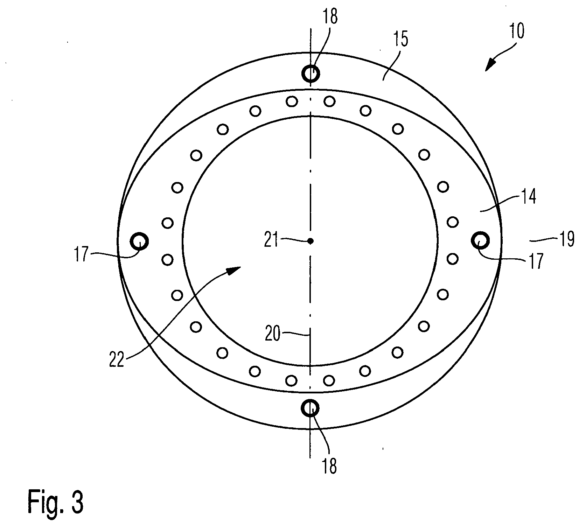

Der Zwischenflansch 16 ist über erste Zugstangen 17 mit dem ersten Anschlussflansch 14 und über zweite Zugstangen 18 mit dem zweiten Anschlussflansch 16 verbunden. Die ersten Zugstangen 17, die der Verbindung des Zwischenflansch 16 mit dem ersten Anschlussflansch 14 dienen, liegen, wie am besten Fig. 3 entnommen werden kann, auf einer ersten Achse 19. Die zweiten Zugstangen 18, die der Verbindung des Zwischenflanschs 16 mit dem zweiten Anschlussflansch 15 dienen, liegen auf einer zweiten Achse 20.

Die beiden Achsen 19, 20 sind dabei derart zueinander ausgerichtet bzw. verlaufen derart zueinander, dass dieselben sich schneiden, wobei ein Schnittpunkt 21 der Achsen 19, 20 im Inneren des Kompensators, nämlich im Inneren eines vom Kompensator 10 definierten Strömungskanals 22 liegt. Die erste Achse 19 und die zweite Achse 20 schließen einen Winkel von 90°±10°, insbesondere einen Winkel von 90°±5°, bevorzugt einen Winkel von 90° ein. In diesem Fall sind dann Kompensationen von Angularbewegungen in unterschiedlichen Biegerichtungen vollständig voneinander entkoppelt.

Fig. 4 zeigt eine bevorzugte Einbausituation bzw. einen bevorzugten Anwendungsfall des Kompensators 10 in einem Abgassystem eines Dieselkraftwerks, wobei der Kompensator 10 in ein Rohrleitungssystem zwischen der ersten und zweiten Turboaufladungsstufe integriert ist, nämlich derart, dass der Kompensator 10 mit seinem ersten Anschlussflansch 14 an einen ersten Rohrabschnitt 23 und mit seinem zweiten Anschlussflansch 15 an einem zweiten Rohrabschnitt 24 des Abgassystems des Dieselkraftwerks angeschlossen ist. Durch zum Beispiel Temperaturzyklen des Abgases bedingte Lateralbewegungen und Biegebewegungen können vom erfindungsgemäßen Kompensator 10 vollständig kompensiert werden.

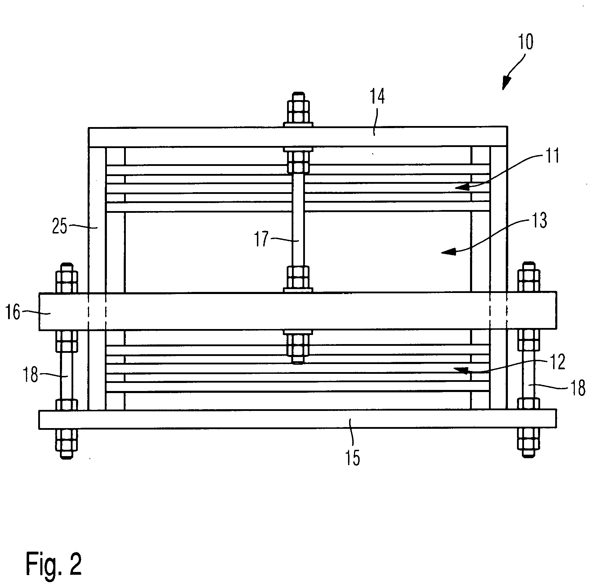

In Fig. 4 ist der Kompensator 10 vertikal eingebaut. Wie Fig. 2 entnommen werden kann, wird zwischen dem Zwischenrohrabschnitt 13 und dem Zwischenflansch 16 ein Element 25 positioniert, bei welchem es sich in Fig. 2 um ein Element 25 aus einem Isolierungsmaterial handelt, welches sich in Axialrichtung gesehen nicht nur über den Zwischenrohrabschnitt 13, sondern auch über die Faltenbalgabschnitte 11, 12 und damit in Axialrichtung gesehen, durchgehend zwischen den beiden Anschlussflanschen 14, 15 erstreckt. Ein derartiges Isolierungsmaterial dient der thermischen Isolierung, I dient aber auch als Dämpfungselement, um dann, wenn der Kompensator 10 einer Schwingungsanregung ausgesetzt ist, einen unmittelbaren Kontakt zwischen dem Zwischenflansch 16 und dem Zwischenrohrabschnitt 13 und hierdurch bedingte Beschädigungen des Zwischenrohrabschnitts 13 zu vermeiden.

Es sei darauf hingewiesen, dass auch andere Dämpfungselemente zwischen dem Zwischenrohrabschnitt 13 und dem Zwischenflansch 16 angeordnet sein können, um im Falle einer Schwingungsanregung eine Beschädigung des Zwischenrohrabschnitts 13 zu vermeiden.

Ein derartiges Dämpfungselement oder ein Element aus einem Isolierungsmaterial ist auch dann zumindest zwischen dem Zwischenrohrabschnitt 13 und dem Zwischenflansch 16 positioniert, wenn der erfindungsgemäße Kompensator 10 in horizontaler Lage eingebaut wird.

Der erfindungsgemäße Kompensator ist vorzugsweise vollständig aus einem metallischen Werkstoff gefertigt. Der Kompensator 10 kann auch nur abschnittsweise aus metallischen Werkstoffen gefertigt sein. Insbesondere ist vorgesehen, dass derselbe im Bereich des Zwischenrohrabschnitts 13, im Bereich der Anschlussflansche 14, 15, im Bereich des Zwischenflanschs 16 sowie im Bereich der Zugstangen 17, 18 aus metallischen Werkstoffen gebildet ist. Die Faltenbalgabschnitte 11, 12 können auch aus einem nicht metallischen Werkstoff, wie zum Beispiel aus einem Gummiwerkstoff oder einem gummiartigen Werkstoff oder aus einem Elastomer-Werkstoff oder Stoff gefertigt sein.

Der erfindungsgemäße Kompensator 10 verfügt demnach über die Faltenbalgabschnitte 11 und 12 sowie über den zwischen denselben positionierten Zwischenrohrabschnitt 13. Ferner verfügt der Kompensator 10 über die Anschlussflansche 14, 15 sowie den Zwischenflansch 16. Der Zwischenflansch 16 ist über auf unterschiedlichen Achsen positionierten Zugstangen 17, 18 mit den beiden Anschlussflanschen 14, 15 verbunden. Axial wirkende Druckkräfte können ebenso aufgenommen werden, wie allseitige Lateralverschiebungen und allachsige Biegeverdrehungen . Der Kompensator 10 ist sowohl für einen vertikalen Einbau als auch für einen horizontalen Einbau geeignet.

Die Flansche 14, 15, 16 liegen in parallel zueinander verlaufenden Ebenen. Die Zugstangen 17, 18 verlaufen senkrecht zu denselben hingegen parallel zur Durchströmungsrichtung des Kompensators 10.

Wie in Fig. 2 durch die gestrichelte Linie im Bereich des Zwischenflansches 16 angedeutet, kann der Zwischenflansch 16 mehrlagig aus mehreren aufeinanderliegenden Lagen ausgebildet sein, wobei sich die Zugstangen 17, 18 jeweils durch alle Lagen desselben erstrecken.

Vorzugsweise kommt der erfindungsgemäße Kompensator 10 in Rohrleitungen eines Abgassystems einer Brennkraftmaschine, wie zum Beispiel einer Schiffsdiesel- oder Dieselkraftwerks-Brennkraftmaschine, zum Einsatz. Der Kompensator 10 ist ein durchströmtes Bauteil des Abgassystems und damit Bestandteil von Rohrleitungen desselben.

### Bezugszeichenliste

- 10: Kompensator
- 11: Faltenbalgabschnitt
- 12: Faltenbalgabschnitt
- 13: Zwischenrohrabschnitt
- 14: Anschlussflansch
- 15: Anschlussflansch
- 16: Zwischenflansch
- 17: Zugstange
- 18: Zugstange
- 19: Achse
- 20: Achse
- 21: Schnittpunkt
- 22: Strömungskanal
- 23: Rohrabschnitt
- 24: Rohrabschnitt
- 25: Element

## Patentansprüche

1. Kompensator (10), mit einem ersten Faltenbalgabschnitt (11), mit einem zweiten Faltenbalgabschnitt (12), mit einem zwischen dem ersten Faltenbalgabschnitt (11) und dem zweiten Faltenbalgabschnitt (12) positionierten Zwischenrohrabschnitt (13), mit einem ersten Anschlussflansch (14) und mit einem zweiten Anschlussflansch (15), wobei der erste Faltenbalgabschnitt (11) am ersten Anschlussflansch (14) und Zwischenrohrabschnitt (13) angreift, wobei der zweite Faltenbalgabschnitt (12) am zweiten Anschlussflansch (15) und Zwischenrohrabschnitt (13) angreift, umfassend einen Zwischenflansch (16), der zwischen dem ersten Anschlussflansch (14) und dem zweiten Anschlussflansch (15) positioniert ist und den Zwischenrohrabschnitt (13) außen ohne oder ohne starre Verbindung zu demselben umgibt, wobei der Zwischenflansch (16) über erste Zugstangen (17) mit dem ersten Anschlussflansch und über zweite Zugstangen (18) dem zweiten Anschlussflansch verbunden ist, wobei die ersten Zugstangen (17), über die der Zwischenflansch (16) mit dem ersten Anschlussflansch (14) verbunden ist, auf einer ersten Achse (19) liegen, und dass die zweiten Zugstangen (18), über die der Zwischenflansch (16) mit dem zweiten Anschlussflansch (15) verbunden ist, auf einer zweiten Achse (20) liegen, **dadurch gekennzeichnet, dass** zwischen dem Zwischenflansch (16) und dem Zwischenrohrabschnitt (13) ein Dämpfungselement (25) angeordnet ist, welches sich in Axialrichtung gesehen durchgehend zwischen den beiden Anschlussflanschen (14, 15) erstreckt.

2. Kompensator nach Anspruch 1, **dadurch gekennzeichnet, dass** die erste Achse (19) und die zweite Achse (20) sich derart schneiden, dass ein Schnittpunkt (21) der Achsen (19, 20) im Inneren des Kompensators (10) liegt.

3. Kompensator nach Anspruch 1 oder 2, **dadurch gekennzeichnet, dass** das die erste Achse (19) und die zweite Achse (20) einen Winkel von 90°±10°, insbesondere von 90°±5°, einschließen.

4. Kompensator nach Anspruch 3, **dadurch gekennzeichnet, dass** das die erste Achse (19) und die zweite Achse (20) ein Winkel von 90° einschließen.

5. Kompensator nach einem der Ansprüche 1 bis 4, **dadurch gekennzeichnet, dass** zwischen dem Zwischenflansch (16) und dem Zwischenrohrabschnitt (13) ein Isolierungsmaterial (25) angeordnet ist.

6. Kompensator nach einem der Ansprüche 1 bis 5, **dadurch gekennzeichnet, dass** derselbe aus metallischen Werkstoffen gefertigt ist.

7. Kompensator nach einem der Ansprüche 1 bis 6, **dadurch gekennzeichnet, dass** derselbe im Bereich des Zwischenrohrabschnitts (13), der Anschlussflansche (14, 15), des Zwischenflanschs (16) und der Zugstangen (17, 18) aus metallischen Werkstoffen gefertigt ist, wohingegen derselbe im Bereich der Faltenbalgabschnitte (11, 12) aus einem nicht-metallischen Werkstoff gefertigt ist.

8. Kompensator nach Anspruch 7, **dadurch gekennzeichnet, dass** der nichtmetallische Werkstoff ein Gummiwerkstoff oder gummiartiger Werkstoff oder ein Elastomer-Werkstoff ist.

## Claims

1. A compensator (10), having a first bellows section (11), having a second bellows section (12), having an intermediate pipe section (13) positioned between the first bellows section (11) and the second bellows section (12), having a first connecting flange (14) and having a second connecting flange (15), wherein the first bellows section (11) acts on the first connecting flange (14) and intermediate pipe section (13), wherein the second bellows section (12) acts on the second connecting flange (15) and intermediate pipe section (13), comprising an intermediate flange (16), which is positioned between the first connecting flange (14) and the second connecting flange (15) and surrounds the intermediate pipe section (13) outside without or without rigid connection to the same, wherein the intermediate flange (16) is connected via first pull rods (17) to the first connecting flange and via second pull rods (18) to the second connecting flange, wherein the first pull rods (17), via which the intermediate flange (16) is connected to the first connecting flange (14), lie on a first axis (19), and that the second pull rods (18), via which the intermediate flange (16) is connected to the second connecting flange, lie on a second axis (20), **characterized in that** between the intermediate flange (16) and the intermediate pipe section (13) a damping element (25) is arranged, which seen in the axial direction continuously extends between the two connecting flanges (14, 15).

2. The compensator according to Claim 1, **characterized in that** the first axis (19) and the second axis (20) intersect one another in such a manner that a point of intersection (21) of the axes (19, 20) lies in the interior of the compensator (10).

3. The compensator according to Claim 1 or 2, **characterized in that** the first axis (19) and the second axis (20) include an angle of 90° ± 10°, in particular 90° ± 5°.

4. The compensator according to Claim 3, **characterized in that** the first axis (19) and the second axis (20) include an angle of 90°.

5. The compensator according to any one of the Claims 1 to 4, **characterized in that** between the intermediate flange (16) and the intermediate pipe section (13) an insulating material (25) is arranged.

6. The compensator according to any one of the Claims 1 to 5, **characterized in that** the same is manufactured from metallic materials.

7. The compensator according to any one of the Claims 1 to 6, **characterized in that** the same, in the region of the intermediate pipe section (13), of the connecting flanges (14, 15), of the intermediate flange (16) and of the pull rods (17, 18) is manufactured from metallic materials, whereas the same in the region of the bellows sections (11, 12) is manufactured from a non-metallic material.

8. The compensator according to Claim 7, **characterized in that** the non-metallic material is a rubber material or rubber-like material or an elastomer material.

## Revendications

1. Compensateur (10), comportant une première portion de soufflet (11), comportant une deuxième portion de soufflet (12), comportant une portion de tube intermédiaire (13) positionnée entre la première portion de soufflet (11) et la deuxième portion de soufflet (12), comportant une première bride de raccordement (14) et comportant une deuxième bride de raccordement (15), dans lequel la première portion de soufflet (11) vient en prise avec la première bride de raccordement (14) de la portion de tube intermédiaire (13), dans lequel la deuxième portion de soufflet (12) vient en prise avec la deuxième bride de raccordement (15) et la portion de tube intermédiaire (13), comprenant une bride intermédiaire (16), qui est positionnée entre la première bride de raccordement (14) et la deuxième bride raccordement (15) et entoure la portion de tube intermédiaire (13) par l'extérieur sans liaison rigide avec celle-ci, dans lequel la bride intermédiaire (16) est relié par l'intermédiaire de premières tiges de traction (17) avec la première bride de raccordement et par l'intermédiaire de tiges de traction (18) avec la deuxième bride de raccordement, dans lequel les premières tiges de traction (17), par l'intermédiaire desquelles la bride intermédiaire (16) est reliée avec la première bride de raccordement (14), sont situées sur un premier axe (19) et en ce que les deuxièmes tiges de traction (18) par l'intermédiaire desquelles la bride intermédiaire (16) sont reliées avec la deuxième bride de raccordement (15) sont situées sur un deuxième axe (20), **caractérisé en ce que** entre la bride intermédiaire (16) et la portion de tube intermédiaire (13) un élément d'amortissement (25) est disposé, qui s'étend, vu dans la direction axiale, entre les deux brides de raccordement (14,15).

2. Compensateur selon la revendication 1, **caractérisé en ce que** le premier axe (19) et le deuxième axe (20) se coupent en intersection de telle sorte qu'un point d'intersection (21) des axes (19, 20) soit situé à l'intérieur de compensateur (10).

3. Compensateur selon la revendication 1 ou 2, **caractérisé en ce que** le premier axe (19) et le deuxième axe (20) définissent un angle de 90° ± 10°, notamment de 90° ± 5°.

4. Compensateur selon la revendication 3, **caractérisé en ce que** le premier axe (19) et le deuxième axe (20) définissent un angle de 90°.

5. Compensateur selon une des revendications 1 à 4, **caractérisé en ce que** entre la bride intermédiaire (16) et la portion de tube intermédiaire (13) un matériau d'isolation (25) est disposé.

6. Compensateur selon une des revendications 1 à 5, **caractérisé en ce que** celui-ci est fabriqué à partir de matériaux métalliques.

7. Compensateur selon une des revendications 1 à 6, **caractérisé en ce que** celui-ci est fabriqué au niveau de la portion de tube intermédiaire (13), des brides de raccordement (14, 15), de la bride intermédiaire (16) et des tiges de traction (17, 18) à partir de matériaux métalliques, alors que celui-ci est fabriqué au niveau des portions de soufflet (11, 12) à partir d'un matériau non métallique.

8. Compensateur selon la revendication 7, **caractérisé en ce que** le matériau métallique est un matériau caoutchouteux ou un matériau de type caoutchouc ou un matériau élastomère.
